# EUROPÄISCHE PATENTANMELDUNG

(11) **EP 4 607 270 A1**
(43) Veröffentlichungstag der Anmeldung: **27.08.2025**
(21) Anmeldenummer: 24158645.2
(22) Anmeldetag: 20.02.2024
(51) Int. Cl.: G03B 15/05, H04N 23/56

(54) **VERFAHREN ZUM BETREIBEN EINER FOTOBOX, FOTOBOX**

(71) Anmelder: KRUU GmbH, 74177 Bad Friedrichshall (DE)
(72) Erfinder: Grünberg, Oliver, 74177 Bad Friedrichshall (DE)
(74) Vertreter: DREISS Patentanwälte PartG mbB

(57) **Zusammenfassung**

Die Erfindung betrifft ein Verfahren zum Betreiben einer Fotobox (10), wobei die Fotobox (10) ein Gehäuse (12), eine Kamera (14), und ein Leuchtdioden-Array (20) umfasst, das eine Vielzahl von individuell ansteuerbaren Leuchtdioden (26) umfasst, wobei das Leuchtdioden-Array gemäß einer Steueranweisung derart angesteuert wird, dass das Leuchtdioden-Array wenigstens zeitweise einen Leuchtzustand einnimmt, in dem sich die Helligkeit wenigstens einer ersten Leuchtdiode (26A) der Leuchtdioden von der Helligkeit wenigstens einer zweiten Leuchtdiode (26B) der Leuchtdioden unterscheidet. Die Erfindung betrifft außerdem eine Fotobox (10).

## Beschreibung

Die vorliegende Erfindung betrifft das technische Gebiet der Fotografie. Insbesondere betrifft die vorliegende Erfindung eine Fotobox sowie ein Verfahren zum Betreiben einer Fotobox.

Eine Fotobox im vorliegenden Sinne ist eine Fotografieeinrichtung, die in der Regel in einer selbststehenden Konfiguration verwendet wird. Üblicherweise weist eine Fotobox hierzu ein Stativ auf, das an einem Gehäuse der Fotobox befestigt oder befestigbar ist. Eine Fotobox kann aber auch ohne ein Stativ verwendet werden. Hierzu kann die Fotobox bspw. auf einem Tisch oder einer sonstigen Oberfläche platziert werden. Eine Fotobox kann insbesondere transportabel sein, wobei hiermit gemeint ist, dass die Fotobox durch eine Person händisch und ohne mechanische Hilfsmittel, wie beispielsweise eine Sackkarre oder eine Staplerameise, transportierbar ist. Auch eine Bildaufnahme im getragenen Zustand ist zumindest bei einigen Fotoboxen möglich. Mit einer Fotobox im vorliegenden Sinne ist aber keineswegs eine handgeführte Consumer-Kamera gemeint.

Fotoboxen erfreuen sich bei Feiern wie beispielsweise Hochzeiten zunehmender Beliebtheit. Sie ermöglichen es, dass ein Fotograf zur Aufnahme von Bildern nicht zwingend anwesend sein muss. Vielmehr können sich ein Benutzer und/oder eine Benutzergruppe vor der Fotobox positionieren und eigenständig Bilder mit der Fotobox aufnehmen.

Eine solche Fotobox ist beispielsweise aus der Gebrauchsmusterschrift DE 20 2018 101 019 U1 bekannt. Die Fotobox umfasst ein Gehäuse, in dem eine Kamera angeordnet ist. Die Fotobox umfasst außerdem ein Leuchtdioden-Array, das derart an der Fotobox angeordnet ist, dass ein Erfassungsbereich der Kamera durch das Leuchtdioden-Array beleuchtet werden kann.

Die Erfindung beschäftigt sich mit der Aufgabe, das Benutzererlebnis einer Fotobox zu verbessern.

Erfindungsgemäß ist hierzu ein Verfahren zum Betreiben einer Fotobox mit den Merkmalen des Anspruchs 1 vorgesehen.

Die Fotobox umfasst ein Gehäuse, in dem eine Kamera angeordnet ist. Die Kamera ist auf einen Erfassungsbereich außerhalb des Gehäuses gerichtet. Die Kamera kann beispielsweise eine USB-Kamera, eine Systemkamera, eine Industriekamera oder eine Kompaktkamera sein. Die Fotobox umfasst außerdem ein Leuchtdioden-Array, das derart in oder an dem Gehäuse angeordnet ist, dass der Erfassungsbereich durch das Leuchtdioden-Array beleuchtbar ist. Das Leuchtdioden-Array kann also den Bereich beleuchten, auf den die Kamera gerichtet ist. Folglich kann das Leuchtdioden-Array die Lichtverhältnisse in diesem Bereich beeinflussen. Das Leuchtdioden-Array umfasst eine Vielzahl von individuell ansteuerbaren Leuchtdioden. Erfindungsgemäß ist vorgesehen, dass das Leuchtdioden-Array gemäß einer Steueranweisung derart angesteuert wird, dass das Leuchtdioden-Array wenigstens zeitweise einen Leuchtzustand einnimmt, bei dem sich die Helligkeit wenigstens einer ersten Leuchtdiode der Leuchtdioden von der Helligkeit wenigstens einer zweiten Leuchtdiode der Leuchtdioden unterscheidet.

Das vorgeschlagene Verfahren hat den Vorteil, dass der Funktionsumfang des Leuchtdioden-Arrays erweitert werden kann. Durch die erfindungsgemäße Ansteuerung kann das Leuchtdioden-Array zusätzlich zu seiner eigentlichen Funktion, der Beleuchtung des Erfassungsbereichs, dazu genutzt werden, um Grafiken, Informationen oder sonstiges darzustellen. Dies ermöglicht eine Individualisierung der Fotobox durch den Benutzer und verbessert dadurch die Benutzererfahrung.

Der hier verwendete Begriff "Leuchtzustand" bezeichnet einen Zustand des Leuchtdioden-Arrays, der durch eine Person visuell wahrnehmbar ist. Es sei darauf hingewiesen, dass Leuchtdioden-Arrays oftmals durch ein sogenanntes Multiplexverfahren angesteuert werden. Bei einem Multiplexverfahren ist zu jedem Zeitpunkt immer nur eine Reihe oder nur eine Spalte des Leuchtdioden-Arrays aktiv. Die Wechselfrequenz, mit der zwischen einzelnen Reihen oder einzelnen Spalten gewechselt wird, ist bei einem Multiplexverfahren allerdings derart hoch, dass die Aktivierung einzelner Reihen oder einzelner Spalten durch eine Person nicht visuell wahrnehmbar ist. Diese Wechselfrequenz beträgt typischerweise zumindest 50 Hz pro Reihe oder 50 Hz pro Spalte. Es handelt sich folglich nicht um Leuchtzustände des Leuchtdioden-Arrays im Sinne der Offenbarung.

Die Helligkeit einer Leuchtdiode ist die Intensität, mit der die Leuchtdiode Licht emittiert.

In einigen Ausführungsformen sind die Leuchtdioden des Leuchtdioden-Arrays baugleich. Vorzugsweise sind die Leuchtdioden des Leuchtdioden-Arrays weiße Leuchtdioden. Das Leuchtdioden-Array ist also ein Array weißer Leuchtdioden. Weiße Leuchtdioden sind für die gewünschte Beleuchtung des Erfassungsbereichs besonders geeignet.

In einigen Ausführungsformen ist die wenigstens eine erste Leuchtdiode oder die wenigstens eine zweite Leuchtdiode in dem Leuchtzustand ausgeschaltet, wobei dann die wenigstens eine andere Leuchtdiode, also die wenigstens eine zweite Leuchtdiode oder die wenigstens eine erste Leuchtdiode, eingeschaltet ist. Dadurch wird ein besonders starker Helligkeitskontrast zwischen den Leuchtdioden erzeugt.

In einigen anderen Ausführungsformen sind sowohl die wenigstens eine erste Leuchtdiode als auch die wenigstens eine zweite Leuchtdiode in dem Leuchtzustand eingeschaltet. In diesen Ausführungsformen emittieren sowohl die wenigstens eine erste Leuchtdiode als auch die wenigstens eine zweite Leuchtdiode in dem Leuchtzustand Licht, aber mit unterschiedlicher Intensität.

In einigen bevorzugten Ausführungsformen ist vorgesehen, dass sich in dem Leuchtzustand die Helligkeit wenigstens einer dritten Leuchtdiode der Leuchtdioden von der Helligkeit der wenigstens einen ersten Leuchtdiode und von der Helligkeit der wenigstens einen zweiten Leuchtdiode unterscheidet. In dem Leuchtzustand sind also zumindest drei verschiedene Helligkeiten bzw. Lichtintensitäten vorhanden. Dadurch werden die Gestaltungsmöglichkeiten im Hinblick auf die Individualisierung der Anzeige des Leuchtdioden-Arrays weiter gesteigert. Verschiedene Helligkeiten bzw. Lichtintensitäten können steuerungstechnisch beispielsweise durch eine Veränderung von Tastgraden realisiert werden.

In einigen bevorzugten Ausführungsformen ist vorgesehen, dass in dem Leuchtzustand mehrere erste Leuchtdioden, also Leuchtdioden mit einer ersten Helligkeit, und/oder mehrere zweite Leuchtdioden, also Leuchtdioden mit einer von der ersten Helligkeit abweichenden zweiten Helligkeit, vorhanden sind. Dies ermöglicht es, auch komplexe Strukturen durch das Leuchtdioden-Array darzustellen. Es können zusätzlich auch eine oder mehrere dritte Leuchtdioden, also Leuchtdioden mit einer von der ersten Helligkeit und von der zweiten Helligkeit abweichenden dritten Helligkeit, vorhanden sein.

Vorzugsweise umfasst das Leuchtdioden-Array mehrere Reihen von Leuchtdioden und/oder mehrere Spalten von Leuchtdioden. Es kann dann jede Reihe von Leuchtdioden durch eine jeweils andere Steuereinheit angesteuert werden. Alternativ kann jede Spalte von Leuchtdioden durch eine jeweils andere Steuereinheit angesteuert werden. Die Verwendung einer jeweiligen Steuereinheit für jede Reihe bzw. jede Spalte hat den Vorteil, dass im Betrieb eine nur geringe Wärmeentwicklung erreicht werden kann. Insbesondere kann ein energieintensives Multiplexverfahren vermieden werden, was mit einer vergleichsweise hohen Wärmeentwicklung einhergehen würde. Vorzugsweise sind die Steuereinheiten jeweils als mehrkanalige LED-Treiber ausgebildet. Die LED-Treiber können beispielsweise jeweils 16-kanalig ausgebildet sein. Die Verwendung von Steuereinheiten des Typs TLC59116 (vertrieben unter dieser Bezeichnung von Texas Instruments Incorporated) hat sich als besonders vorteilhaft erwiesen. Vorzugsweise steuern die Steuereinheiten die einzelnen Leuchtdioden pulsweitenmoduliert an. Dies ermöglicht eine präzise Einstellung der Helligkeit der Leuchtdioden.

In einigen bevorzugten Ausführungsformen ist vorgesehen, dass die Steueranweisung durch eine Haupt-Steuereinheit erzeugt wird, wobei die Haupt-Steuereinheit den Steuereinheiten die Steueranweisung bereitstellt. Zusätzlich zu den Steuereinheiten ist also die Haupt-Steuereinheit vorhanden. Vorzugsweise ist die Haupt-Steuereinheit als Mikrocontroller ausgebildet. Ein Mikrocontroller ist für komplexe Rechenvorgänge wie beispielsweise das Erzeugen der Steueranweisung besonders geeignet. Die Haupt-Steuereinheit kann den Steuereinheiten jeweils die gesamte Steueranweisung bereitstellen. Vorzugsweise stellt die Haupt-Steuereinheit jedoch jeder der Steuereinheiten jeweils nur den für die Steuereinheit relevanten Teil der Steueranweisung bereit.

In einigen bevorzugten Ausführungsformen ist vorgesehen, dass das Leuchtdioden-Array gemäß der Steueranweisung derart angesteuert wird, dass das Leuchtdioden-Array in zeitlicher Abfolge mehrere Leuchtzustände einnimmt, die sich voneinander unterscheiden. Folglich ist wenigstens eine Leuchtdiode in einem Leuchtzustand eine erste Leuchtdiode und in einem anderen Leuchtzustand eine zweite Leuchtdiode. Mit den Leuchtzuständen sind dabei jeweils durch eine Person visuell wahrnehmbare Zustände des Leuchtdioden-Arrays gemeint, wie zuvor erläutert. Die Darstellung verschiedener Leuchtzustände in zeitlicher Abfolge hat den Vorteil, dass durch das Leuchtdioden-Array auch bewegte Strukturen dargestellt werden können.

In einigen bevorzugten Ausführungsformen ist vorgesehen, dass das Leuchtdioden-Array die Leuchtzustände mit einer Wechselfrequenz von höchstens 10 Hz wechselt. Dies ist ausreichend langsam, sodass der Wechsel der Leuchtzustände durch Personen nicht als unangenehm empfunden wird. Vorzugsweise beträgt die Wechselfrequenz höchstens 5 Hz.

In einigen bevorzugten Ausführungsformen ist vorgesehen, dass die Steueranweisung in Abhängigkeit von einer durch einen Benutzer bereitstellbaren Leuchtvorgabe erzeugt wird. Durch die Leuchtvorgabe kann der Benutzer der Fotobox vorgeben, welchen Leuchtzustand bzw. welche Leuchtzustände das Leuchtdioden-Array einnehmen soll. Der Leuchtzustand bzw. die Leuchtzustände unterliegen also der Beeinflussung durch den Benutzer. Beispielsweise kann die Leuchtvorgabe durch eine Mensch-Maschine-Schnittstelle, insbesondere ein Touchdisplay, der Fotobox bereitgestellt werden.

In einigen bevorzugten Ausführungsformen ist vorgesehen, dass die Leuchtvorgabe wenigstens ein Symbol und/oder wenigstens ein Schriftzeichen umfasst. Die Leuchtvorgabe kann mehrere Symbole im Sinne einer Symbolsequenz umfassen. Je nach Komplexität des Leuchtdioden-Arrays kann die Symbolsequenz bspw. eine Filmsequenz oder ein animiertes GIF (Graphics Interchange Format) sein. Die Leuchtvorgabe kann auch mehrere Schriftzeichen im Sinne einer Schriftzeichenfolge umfassen. Das Leuchtdioden-Array wird vorzugsweise derart angesteuert, dass es das wenigstens eine Symbol und/oder das wenigstens eine Schriftzeichen anzeigt. Umfasst die Leuchtvorgabe eine Schriftzeichenfolge, so kann das Leuchtdioden-Array derart angesteuert werden, dass es die Schriftzeichenfolge als Laufschrift anzeigt. Dadurch lassen sich selbst lange Schriftzeichenfolgen durch ein Leuchtdioden-Array mit vergleichsweise wenigen Leuchtdioden anzeigen. Zeigt das Leuchtdioden-Array die Schriftzeichenfolge als Laufschrift an, so wird die Laufschrift vorzugsweise dadurch erzeugt, dass das Leuchtdioden-Array in zeitlicher Abfolge mehrere Leuchtzustände einnimmt, die sich voneinander unterscheiden.

In einigen bevorzugten Ausführungsformen ist vorgesehen, dass die Kamera in Abhängigkeit von einer durch einen Benutzer bereitstellbaren Fotografiervorgabe dazu angesteuert wird, wenigstens eine Bildaufnahme durchzuführen. Im Hinblick auf die Bereitstellung der Fotografiervorgabe sind verschiedene Ausführungen denkbar. Beispielsweise kann die Fotografiervorgabe mittels des zuvor bereits erwähnten Touchdisplays bereitgestellt werden. Vorzugsweise umfasst die Fotobox einen Fernauslöser, wobei die Fotografiervorgabe mittels des Fernauslösers bereitgestellt werden kann.

In einigen bevorzugten Ausführungsformen ist vorgesehen, dass das Leuchtdioden-Array in Abhängigkeit von der Fotografiervorgabe derart angesteuert wird, dass eine durch das Leuchtdioden-Array erzeugte Helligkeit für die Dauer der Bildaufnahme erhöht wird. In dem Leuchtzustand, bei dem sich die Helligkeit der wenigstens einen ersten Leuchtdiode von der Helligkeit der wenigstens einen zweiten Leuchtdiode unterscheidet, ist die Beleuchtung des Erfassungsbereichs für eine Bildaufnahme gegebenenfalls nicht optimal. Deshalb ist es erwünscht, dass die Helligkeit des Leuchtdioden-Arrays für die Dauer der Bildaufnahme erhöht wird. Die Erhöhung in Abhängigkeit von der Fotografiervorgabe hat den Vorteil, dass eine zusätzliche Eingabe des Benutzers eigens für die Erhöhung der Helligkeit des Leuchtdioden-Arrays nicht notwendig ist. Dies trägt zu einem hohen Benutzerkomfort bei. Vorzugsweise wird die Helligkeit des Leuchtdioden-Arrays im Anschluss an die erfolgte Bildaufnahme verringert. Die Verringerung der Helligkeit im Anschluss an die erfolgte Bildaufnahme kann auch zeitverzögert stattfinden. Beispielsweise wird die Helligkeit erst nach Ablauf eines Timers verringert.

In einigen bevorzugten Ausführungsformen ist vorgesehen, dass das Leuchtdioden-Array eine Gruppe von ausgewählten Leuchtdioden umfasst, und dass die erzeugte Helligkeit dadurch erhöht wird, dass die ausgewählten Leuchtdioden für die Dauer der Bildaufnahme unabhängig von der Leuchtvorgabe eingeschaltet werden. Hierdurch kann während der Bildaufnahme eine ausreichende Helligkeit sichergestellt werden.

In einigen Ausführungsformen umfasst die Gruppe von ausgewählten Leuchtdioden sämtliche Leuchtdioden des Leuchtdioden-Arrays. Folglich werden für die Dauer der Bildaufnahme sämtliche Leuchtdioden des Leuchtdioden-Arrays eingeschaltet.

In einigen anderen Ausführungsformen umfasst die Gruppe von ausgewählten Leuchtdioden nur einen Teil der Leuchtdioden des Leuchtdioden-Arrays. Wenigstens eine Leuchtdiode, vorzugsweise mehrere Leuchtdioden, sind also nicht Teil der Gruppe von ausgewählten Leuchtdioden. Dies hat den Vorteil, dass auch für die Dauer der Bildaufnahme das Leuchtdioden-Array weiterhin durch die bereitgestellte Leuchtvorgabe individualisiert werden kann. Durch eine geeignete Wahl der Gruppe von ausgewählten Leuchtdioden kann eine ausreichende Beleuchtung dennoch sichergestellt werden. In einigen bevorzugten Ausführungsformen ist vorgesehen, dass die Gruppe von ausgewählten Leuchtdioden durch eine oberste Reihe und/oder durch eine unterste Reihe des Leuchtdioden-Arrays gebildet wird.

Erfindungsgemäß ist außerdem eine Fotobox mit den Merkmalen des Anspruchs 13 vorgesehen.

Die erfindungsgemäße Fotobox umfasst ein Gehäuse, in dem eine Kamera angeordnet ist. Die Kamera ist auf einen Erfassungsbereich außerhalb des Gehäuses gerichtet. Die Fotobox umfasst außerdem ein Leuchtdioden-Array, das derart an oder in dem Gehäuse angeordnet ist, dass der Erfassungsbereich durch das Leuchtdioden-Array beleuchtbar ist, wobei das Leuchtdioden-Array eine Vielzahl von individuell ansteuerbaren Leuchtdioden umfasst. Die Fotobox umfasst außerdem eine Steuereinrichtung, die so ausgebildet ist, dass sie das vorstehend beschriebene Verfahren ausführt.

Die Steuereinrichtung ist also dazu ausgebildet, das Leuchtdioden-Array gemäß einer Steueranweisung derart anzusteuern, dass das Leuchtdioden-Array wenigstens zeitweise einen Leuchtzustand einnimmt, in dem sich die Helligkeit wenigstens einer ersten Leuchtdiode der Leuchtdioden von der Helligkeit wenigstens einer zweiten Leuchtdiode der Leuchtdioden unterscheidet.

Vorteile und Weiterbildungsmöglichkeiten der Fotobox sind als ebenso in Bezug auf das Verfahren beschrieben zu verstehen und umgekehrt sind Vorteile und Weiterbildungsmöglichkeiten des Verfahrens als ebenso in Bezug auf die Fotobox beschrieben zu verstehen.

Vorzugsweise umfasst die Steuereinrichtung zur Ansteuerung des Leuchtdioden-Arrays wenigstens eine Steuereinheit. Es können auch mehrere Steuereinheiten vorhanden sein.

Vorzugsweise umfasst die Steuereinrichtung einen computerlesbaren, nicht-flüchtigen Datenspeicher, auf dem ein Computerprogramm gespeichert ist, das Befehle umfasst, die bewirken, dass die Steuereinrichtung das vorstehend beschriebene Verfahren ausführt.

In einigen Ausführungsformen umfasst die Fotobox ein Stativ, das an dem Gehäuse befestigt ist.

In einigen Ausführungsformen sind die Leuchtdioden des Leuchtdioden-Arrays baugleich. Vorzugsweise sind die Leuchtdioden des Leuchtdioden-Arrays weiße Leuchtdioden. Das Leuchtdioden-Array ist also ein Array weißer Leuchtdioden. Weiße Leuchtdioden sind für die gewünschte Beleuchtung des Erfassungsbereichs besonders geeignet.

In einigen Ausführungsformen ist die Kamera eine USB-Kamera, eine Systemkamera, eine Industriekamera oder eine Kompaktkamera. Eine USB-Kamera hat im Zusammenhang mit einer Fotobox den Vorteil, dass ihre Wärmeentwicklung im Betrieb gering ist. Eine geringe Wärmeentwicklung ist bei einer Fotobox deshalb besonders vorteilhaft, weil die Kamera in dem Gehäuse angeordnet ist, was die Abführung von Wärme erschwert. Die Verwendung einer USB-Kamera als Kamera ist deshalb besonders bevorzugt.

In einigen Ausführungsformen ist das Leuchtdioden-Array an dem Gehäuse angeordnet. Beispielsweise ist das Leuchtdioden-Array ein Anbauteil und an dem Gehäuse lösbar befestigt.

In einigen anderen Ausführungsformen ist das Leuchtdioden- Array in dem Gehäuse angeordnet. Die Kamera und das Leuchtdioden-Array können durch dieselbe Durchgangsöffnung des Gehäuses auf den Erfassungsbereich gerichtet sein. Vorzugsweise umfasst das Gehäuse jedoch eine erste Durchgangsöffnung, durch welche die Kamera auf den Erfassungsbereich gerichtet ist, und eine zweite Durchgangsöffnung, durch welche das Leuchtdioden-Array auf den Erfassungsbereich gerichtet ist.

Vorzugsweise umfasst das Leuchtdioden-Array wenigstens 40 Leuchtdioden. Dadurch kann der Leuchtzustand des Leuchtdioden-Arrays in hohem Maße individualisiert werden.

In einigen bevorzugten Ausführungsformen umfasst das Leuchtdioden-Array mehrere Reihen von Leuchtdioden und/oder mehrere Spalten von Leuchtdioden. Das Leuchtdioden-Array kann beispielsweise 5 Reihen zu je 16 Leuchtdioden (also 16 Spalten zu je 5 Leuchtdioden) umfassen. Vorzugsweise ist jede der Reihen durch eine jeweils andere Steuereinheit der Steuereinrichtung ansteuerbar. Jeder Reihe des Leuchtdioden-Arrays ist also eine jeweils andere Steuereinheit der Steuereinrichtung zugeordnet. Dies ermöglicht eine besonderes präzise Anpassung der Ansteuerung der Leuchtdioden. Alternativ ist jede der Spalten durch eine jeweils andere Steuereinheit der Steuereinrichtung ansteuerbar. Vorzugsweise sind die Steuereinheiten jeweils als mehrkanaliger LED-Treiber ausgebildet. Die LED-Treiber können beispielsweise jeweils 16-kanalig ausgebildet sein. Die Verwendung von Steuereinheiten des Typs TLC59116 (vertrieben unter dieser Bezeichnung von Texas Instruments Incorporated) hat sich als besonders vorteilhaft erwiesen. Vorzugsweise steuern die Steuereinheiten die einzelnen Leuchtdioden pulsweitenmoduliert an. Dies ermöglicht eine präzise Einstellung der Helligkeit der Leuchtdioden.

In einigen Ausführungsformen sind die Steuereinheiten durch einen Datenbus mit dem Leuchtdioden-Array kommunikationstechnisch verbunden. Der Datenbus kann beispielsweise ein I²C-Datenbus sein.

In einigen bevorzugten Ausführungsformen ist vorgesehen, dass die Fotobox eine Haupt-Steuereinheit umfasst, die kommunikationstechnisch mit den Steuereinheiten verbunden ist. Die Haupt-Steuereinheit ist dazu ausgebildet, die Steueranweisung zu erzeugen und die erzeugte Steueranweisung den Steuereinheiten bereitzustellen. Vorzugsweise ist die Haupt-Steuereinheit als Mikrocontroller ausgebildet. Ein Mikrocontroller ist für komplexe Rechenvorgänge wie beispielsweise das Erzeugen der Steueranweisung besonders geeignet. Die Haupt-Steuereinheit kann den Steuereinheiten jeweils die gesamte Steueranweisung bereitstellen. Vorzugsweise stellt die Haupt-Steuereinheit jedoch jeder der Steuereinheiten jeweils nur den für die jeweilige Steuereinheit relevanten Teil der Steueranweisung bereit.

In einigen Ausführungsformen umfasst die Fotobox eine Mensch-Maschine-Schnittstelle zum Bereitstellen einer Leuchtvorgabe durch einen Benutzer. Besonders bevorzugt ist die Mensch-Maschine-Schnittstelle als Touchdisplay ausgebildet. Ein solches Touchdisplay kann zusätzlich zu der Bereitstellung der Leuchtvorgabe weitere Funktionen der Fotobox realisieren. Beispielsweise können auf dem Touchdisplay durch die Kamera aufgenommene Bilder angezeigt werden. Vorzugsweise ist das Touchdisplay in einer dritten Durchgangsöffnung des Gehäuses angeordnet.

In einigen Ausführungsformen sind die erste Durchgangsöffnung, die zweite Durchgangsöffnung und die dritte Durchgangsöffnung in demselben Wandungsabschnitt des Gehäuses ausgebildet. Dieser Wandungsabschnitt kann die Vorderwandung des Gehäuses sein.

In einigen Ausführungsformen umfasst die Fotobox einen Fernauslöser zum Bereitstellen einer Fotografiervorgabe durch den Benutzer.

In einigen bevorzugten Ausführungsformen ist vorgesehen, dass das Gehäuse einen aus einem Metallwerkstoff gefertigten Wandungsabschnitt umfasst. Der aus dem Metallwerkstoff gefertigte Wandungsabschnitt kann beispielsweise ein Rückdeckel des Gehäuses sein. Vorzugsweise ist der Metallwerkstoff Aluminium. Vorzugsweise sind die Steuereinrichtung, die Kamera und/oder das Leuchtdioden-Array mit dem Wandungsabschnitt in Wärmeleitkontakt. Der Wandungsabschnitt kann folglich für diese Komponenten der Fotobox als Kühlkörper dienen. Beispielsweise sind hierzu eine oder mehrere Leiterplatten der Fotobox an dem Wandungsabschnitt angeordnet.

In einigen Ausführungsformen umfasst das Gehäuse ein aus Kunststoff gefertigtes Tiefziehteil. Besonders bevorzugt umfasst das Gehäuse sowohl das aus Kunststoff gefertigte Tiefziehteil als auch den aus dem Metallwerkstoff gefertigten Wandungsabschnitt. Beispielsweise ist der Wandungsabschnitt in eine Aussparung des Tiefziehteils eingesetzt.

Im Folgenden wird die Erfindung anhand der Zeichnungen näher erläutert. Es zeigen:
- Figur 1: eine Frontansicht einer Fotobox gemäß einem Ausführungsbeispiel;
- Figur 2: eine Rückansicht der in Figur 1 gezeigten Fotobox;
- Figur 3: eine schematische Darstellung von Komponenten der in den Figuren 1 und 2 gezeigten Fotobox;
- Figur 4: ein Verfahren zum Betreiben der Fotobox; und
- Figur 5: eine weitere Darstellung der Fotobox.

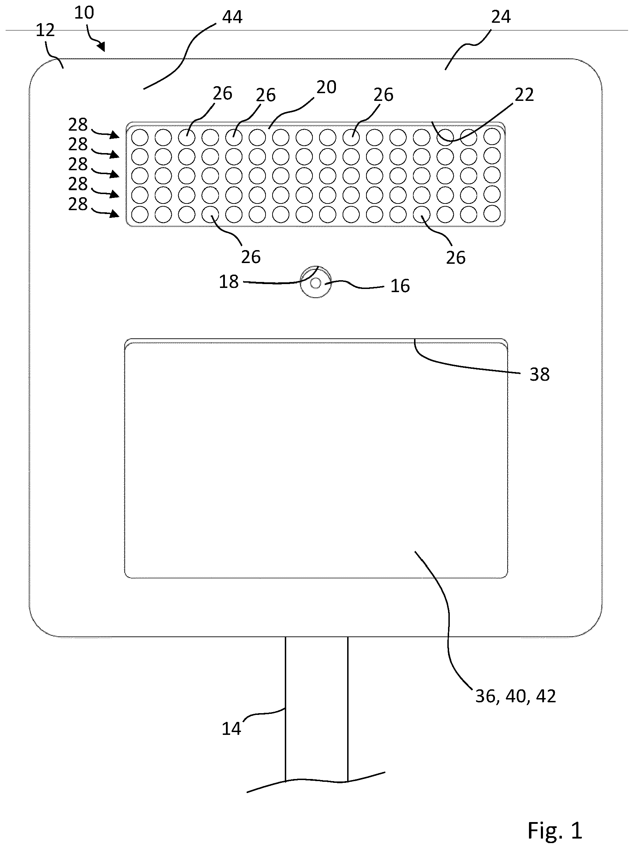

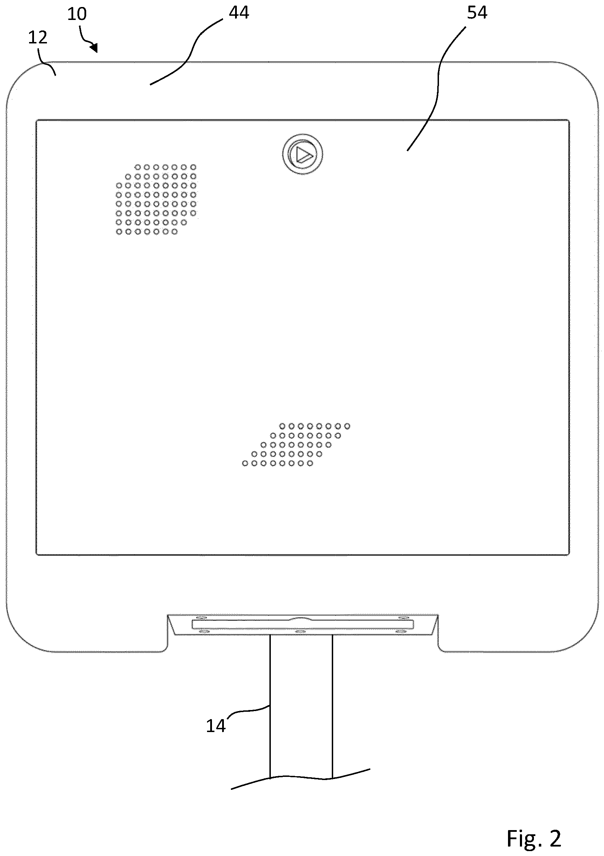

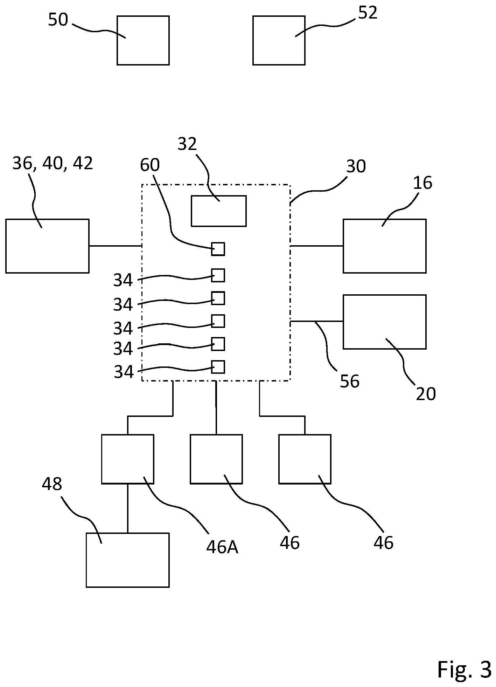

Die Figuren 1 und 2 zeigen eine Fotobox 10. Figur 3 zeigt ein Funktionsdiagramm von Komponenten der Fotobox 10. Nicht alle in Figur 3 schematisch dargestellten Komponenten sind in den Figuren 1 und 2 erkenntlich.

Die Fotobox 10 umfasst ein Gehäuse 12. Vorliegend umfasst das Gehäuse 12 ein Tiefziehteil 44, also ein durch Tiefziehen gefertigtes Bauteil. Das Tiefziehteil 44 ist aus einem Kunststoff gefertigt, vorzugsweise aus Acrynitril-Butadien-Styrol-Copolymer (ABS). Vorzugsweise ist dem Kunststoff wenigstens ein flammhemmender Stoff beigemischt.

Die Fotobox 10 ist zur selbststehenden Verwendung vorgesehen. Vorliegend ist das Gehäuse 12 der Fotobox 10 hierzu an einem Stativ 14 befestigt. Vorzugsweise ist das Gehäuse 12 an dem Stativ 14 lösbar befestigt.

Die Fotobox 10 umfasst eine Kamera 16, die in dem Gehäuse 12 angeordnet ist. Die Kamera 16 ist auf einen Erfassungsbereich außerhalb des Gehäuses 12 gerichtet, vorliegend durch eine in dem Gehäuse 12 ausgebildete erste Durchgangsöffnung 18. Vorzugsweise ist die Kamera 16 als USB-Kamera ausgebildet. Die Kamera 16 kann aber auch als Kompaktkamera, als Industriekamera oder als Systemkamera ausgebildet sein.

Die Fotobox 10 umfasst außerdem ein Leuchtdioden-Array 20. Das Leuchtdioden-Array 20 ist auf den Erfassungsbereich der Kamera 16 gerichtet. Folglich ist das Leuchtdioden-Array 20 dazu ausgebildet, den Erfassungsbereich zu beleuchten.

Vorliegend ist das Leuchtdioden Array 20 in dem Gehäuse 12 angeordnet und durch eine in dem Gehäuse 12 ausgebildete zweite Durchgangsöffnung 22 auf den Erfassungsbereich gerichtet. Dabei sind die erste Durchgangsöffnung 18 und die zweite Durchgangsöffnung 22 in einer Vorderwandung 24 des Gehäuses 12 ausgebildet. Gemäß einem weiteren Ausführungsbeispiel ist das Leuchtdioden Array 20 an dem Gehäuse 12 angeordnet. Das Leuchtdioden Array 20 kann beispielsweise als Anbauteil ausgebildet und an dem Gehäuse 12 lösbar befestigt sein.

Das Leuchtdioden-Array 20 umfasst eine Vielzahl von individuell ansteuerbaren Leuchtdioden 26. Jede einzelne Leuchtdiode 26 kann also gezielt angesteuert und dadurch eingeschaltet werden, ohne dadurch die anderen Leuchtdioden 26 einzuschalten. Vorzugsweise sind die Leuchtdioden 26 gleich ausgebildet. Es handelt sich um Leuchtdioden 26 desselben Typs. Vorzugsweise sind die Leuchtdioden 26 weiße Leuchtdioden 26.

Vorliegend umfasst das Leuchtdioden-Array 20 fünf Reihen 28 mit jeweils 16 Leuchtdioden 26. Folglich sind insgesamt 80 Leuchtdioden 26 vorhanden. Diese Anzahl und Anordnung von Leuchtdioden 26 ist bevorzugt. Das Leuchtdioden-Array 20 kann aber auch eine davon abweichende Anzahl von Leuchtdioden 26 aufweisen.

Die Fotobox 10 umfasst außerdem eine Steuereinrichtung 30. Die Steuereinrichtung 30 ist in dem Gehäuse 12 angeordnet und in Figur 1 nicht erkenntlich.

Die Steuereinrichtung 30 ist dazu ausgebildet, das Leuchtdioden-Array 20 anzusteuern. Hierzu ist die Steuereinrichtung 30 durch einen Datenbus 56 mit dem Leuchtdioden-Array 20 kommunikationstechnisch verbunden. Die Steuereinrichtung 30 umfasst zur Ansteuerung des Leuchtdioden-Arrays 20 wenigstens eine Steuereinheit 34. Vorliegend sind fünf Steuereinheiten 34 vorhanden. Jede der Steuereinheiten 34 ist dazu ausgebildet, eine jeweils andere Reihe 28 von Leuchtdioden 26 anzusteuern. In dem vorliegenden Ausführungsbeispiel sind die Steuereinheiten 34 16-kanalige LED-Treiber 34.

Die Steuereinrichtung 30 umfasst außerdem eine Haupt-Steuereinheit 60. Die Haupt-Steuereinheit 60 ist mit den Steuereinheiten 34 kommunikationstechnisch verbunden. In dem vorliegenden Ausführungsbeispiel ist die Haupt-Steuereinheit 60 ein Mikrocontroller.

Die Steuereinrichtung 30 ist außerdem mit der Kamera 16 kommunikationstechnisch verbunden und dazu ausgebildet, die Kamera 16 anzusteuern. Hierzu kann die Steuereinrichtung 30 eine weitere Steuereinheit umfassen.

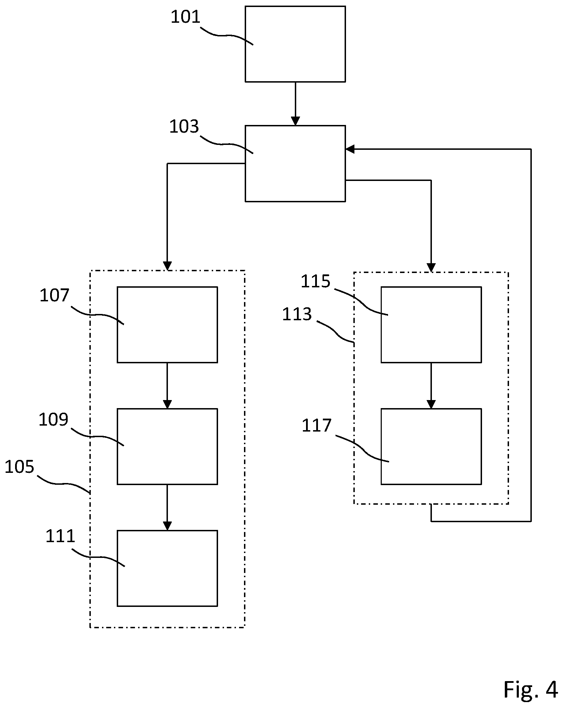

Die Steuereinrichtung 30 umfasst außerdem einen computerlesbaren, nicht-flüchtigen Datenspeicher 32. Auf dem Datenspeicher 32 ist ein Computerprogramm gespeichert, das Befehle umfasst, die bewirken, dass die Fotobox 10 das Verfahren ausführt, das später mit Bezug auf Figur 4 noch näher erläutert wird. Zumindest die Haupt-Steuereinheit 60 ist mit dem Datenspeicher 32 kommunikationstechnisch verbunden, sodass die Haupt-Steuereinheit 60 das Computerprogramm aufrufen kann.

Die Fotobox 10 umfasst außerdem ein Touchdisplay 36. Das Touchdisplay 36 ist in einer dritten Durchgangsöffnung 38 der Vorderwandung 24 des Gehäuses 12 angeordnet. Auch das Touchdisplay 36 ist mit der Steuereinrichtung 30 kommunikationstechnisch verbunden. Das Touchdisplay 36 kann durch einen Benutzer der Fotobox 10 betätigt werden und bildet insofern eine Mensch-Maschine-Schnittstelle 40 der Fotobox 10 aus. Vorzugsweise können auf dem Touchdisplay 36 durch die Kamera 16 aufgenommene Bilder angezeigt werden, sodass das Touchdisplay 36 auch eine Anzeigeeinheit 42 der Fotobox 10 ausbildet.

Bei dem dargestellten Ausführungsbeispiel umfasst die Fotobox 10 außerdem mehrere Anschlüsse 46. Vorliegend sind die Anschlüsse 46 als USB-Anschlüsse ausgebildet. Die Anschlüsse 46 sind mit der Steuereinrichtung 30 kommunikationstechnisch verbunden.

Die Fotobox 10 umfasst außerdem einen Fernauslöser 48. Der Fernauslöser 48 ist an einen ersten Anschluss 46A der Anschlüsse 46 angeschlossen.

Die übrigen Anschlüsse 46 können zum Anschluss verschiedener Geräte genutzt werden. Beispielsweise können ein Drucker oder ein Datenspeicher an die Anschlüsse 46 angeschlossen werden.

Die Fotobox 10 umfasst außerdem einen Stromeingang 50. Vorliegend ist der Stromeingang 50 ein 24V-Gleichstromeingang. An den Stromeingang 50 kann ein externes Netzteil angeschlossen werden. Die verschiedenen Komponenten der Fotobox 10, insbesondere die Kamera 16, das Leuchtdioden-Array 20, die Steuereinrichtung 30 und die Anschlüsse 46, sind mit dem Stromeingang 50 elektrisch verbunden. Der Übersichtlichkeit halber sind die elektrischen Verbindungen zwischen dem Stromeingang 50 und diesen Komponenten in Figur 3 nicht dargestellt.

Die Fotobox 10 umfasst außerdem einen Stromausgang 52, der mit dem Stromeingang 50 elektrisch verbunden ist. Vorliegend ist der Stromausgang 52 ein 24V-Gleichstromausgang. An den Stromausgang 52 kann beispielsweise der zuvor bereits erwähnte Drucker angeschlossen werden.

Vorliegend umfasst das Gehäuse 12 einen Wandungsabschnitt 54, der aus einem Metallwerkstoff, insbesondere aus Aluminium, gefertigt ist. Der Wandungsabschnitt 54 ist in dem dargestellten Ausführungsbeispiel ein Rückdeckel des Gehäuses 12 (siehe Figur 2). Der Wandungsabschnitt 54 kann als Kühlkörper für elektrische Komponenten der Fotobox 10 dienen. Vorzugsweise sind die Steuereinrichtung 30, die Kamera 16 und/oder das Leuchtdioden-Array 20 mit dem Wandungsabschnitt 54 in Wärmeleitkontakt.

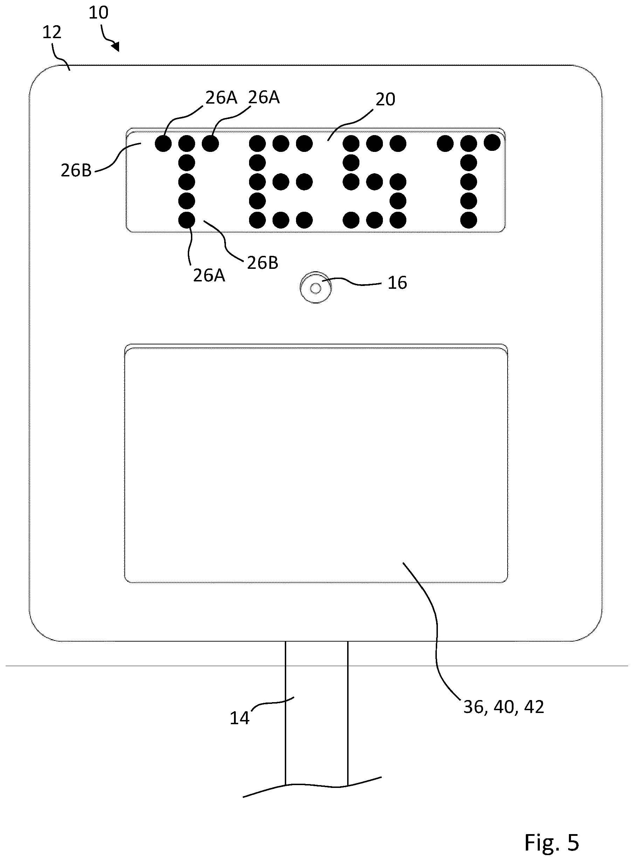

Im Folgenden wird mit zusätzlichem Bezug auf die Figuren 4 und 5 ein vorteilhaftes Verfahren zum Betreiben der Fotobox 10 näher erläutert. Figur 4 zeigt das Verfahren anhand eines Flussdiagramms.

In einem ersten Schritt 101 wird die Fotobox 10 in Betrieb genommen. Dies erfolgt beispielsweise dadurch, dass der Stromeingang 50 mit einem Netzteil elektrisch verbunden wird. Alternativ kann die Inbetriebnahme auch erst durch Betätigung eines Schalters oder dergleichen erfolgen.

In einem zweiten Schritt 103 prüft die Steuereinrichtung 30, ob eine durch einen Benutzer bereitstellbare Fotografiervorgabe vorliegt. Der Benutzer kann die Fotografiervorgabe beispielsweise durch Betätigen des Fernauslösers 48 bereitstellen.

Liegt keine Fotografiervorgabe vor, so wird die Fotobox 10 in einen Standby-Modus 105 versetzt. Die Steuereinrichtung 30 überprüft jedoch weiterhin, ob die Fotografiervorgabe vorliegt.

In dem Standby-Modus 105 prüft die Steuereinrichtung 30 in einem dritten Schritt 107, ob eine durch einen Benutzer bereitstellbare Leuchtvorgabe für das Leuchtdioden-Array 20 vorliegt. Der Benutzer kann die Leuchtvorgabe beispielsweise durch die Mensch-Maschine-Schnittstelle 40 bereitstellen. Durch die Leuchtvorgabe gibt der Benutzer vor, wie das Leuchtdioden-Array 20 im Standby-Modus 105 aufleuchten soll. Beispielsweise kann die Leuchtvorgabe eine Schriftzeichenfolge umfassen, die durch das Leuchtdioden-Array 20 dargestellt werden soll. Rein beispielhalber wird im Folgenden davon ausgegangen, dass als Leuchtvorgabe die Schriftzeichenfolge "TEST" bereitgestellt wird. Das Leuchtdioden-Array 20 soll im Standby-Modus 105 also die Schriftzeichenfolge "TEST" darstellen. Selbstverständlich kann die Leuchtvorgabe auch eine andere Schriftzeichenfolge umfassen. Zudem ist es auch möglich, dass als Leuchtvorgabe keine Schriftzeichen, sondern davon abweichende Symbole vorgegeben werden. Insbesondere ist in dem Datenspeicher 32 eine Liste von möglichen Leuchtvorgaben abgespeichert, aus denen der Benutzer auswählen kann.

Liegt keine Leuchtvorgabe vor, so unterbleibt eine Ansteuerung des Leuchtdioden-Arrays 20 in dem Standby-Modus 105.

Liegt jedoch eine Leuchtvorgabe vor, so wird auf einen vierten Schritt 109 verwiesen. In dem vierten Schritt 109 erzeugt die Steuereinrichtung 30 in Abhängigkeit von der bereitgestellten Leuchtvorgabe eine Steueranweisung. Die Steueranweisung wird derart erzeugt, dass bei Ansteuerung des Leuchtdioden-Arrays 20 gemäß der Steueranweisung die Leuchtvorgabe durch das Leuchtdioden-Array 20 dargestellt wird.

In dem vorliegenden Ausführungsbeispiel wird die Steueranweisung durch die Haupt-Steuereinheit 60 erzeugt. Die Haupt-Steuereinheit 60 stellt dann den Steuereinheiten 34 die Steueranweisung oder nur den für sie relevanten Teil der Steueranweisung bereit.

Die Steueranweisung kann alternativ auch durch die Steuereinheiten 34 selbst erzeugt werden, wobei vorzugsweise jede der Steuereinheiten 34 jeweils nur den für sie relevanten Teil der Steueranweisung erzeugt.

In einem fünften Schritt 111 steuern die Steuereinheiten 34 das Leuchtdioden-Array 20 gemäß der Steueranweisung an. Je nach Leuchtvorgabe nimmt das Leuchtdioden-Array 20 dann einen jeweils anderen Leuchtzustand ein. Bei dem vorliegenden Beispiel wird das Leuchtdioden-Array 20 derart angesteuert, dass es einen Leuchtzustand einnimmt, in dem es die Schriftzeichenfolge "TEST" darstellt (siehe Figur 5). Die Schriftzeichenfolge wird dadurch dargestellt, dass nur eine Gruppe von ersten Leuchtdioden 26A angesteuert bzw. eingeschaltet wird. Eine Gruppe von zweiten Leuchtdioden 26B wird nicht angesteuert und bleibt somit ausgeschaltet. Folglich weisen in dem Leuchtzustand die ersten Leuchtdioden 26A eine andere Helligkeit auf als die zweiten Leuchtdioden 26B. Alternativ können die zweiten Leuchtdioden 26B auch derart angesteuert werden, dass sie Licht mit einer geringeren Intensität emittieren als die ersten Leuchtdioden 26A. Auch das führt zu einem Unterschied in der Helligkeit.

Bei dem vorliegenden Beispiel ist die Schriftzeichenfolge derart kurz, dass sie in einem einzigen Leuchtzustand durch das Leuchtdioden-Array 20 als solche dargestellt werden kann. Umfasst die Leuchtvorgabe eine längere Schriftzeichenfolge, so kann die Steueranweisung derart erzeugt werden, dass das Leuchtdioden-Array 20 die Schriftzeichenfolge als Laufschrift darstellt. Das Leuchtdioden-Array 20 nimmt dann in zeitlicher Abfolge verschiedene Leuchtzustände ein, die sich voneinander unterscheiden.

Stellt die Steuereinrichtung 30 in dem zweiten Schritt 103 oder während des Standby-Modus 105 fest, dass die Fotografiervorgabe vorliegt, so wird die Fotobox 10 in einen Fotografiermodus 113 versetzt.

Die Darstellung der Leuchtvorgabe durch das Leuchtdioden-Array 20 führt mitunter nicht zu einer ausreichenden Beleuchtung des Erfassungsbereichs. Das Leuchtdioden-Array 20 wird deshalb im Rahmen des Fotografiermodus 113 in einem sechsten Schritt 115 derart angesteuert, dass die Helligkeit des Leuchtdioden-Arrays 20 verglichen mit der Darstellung der Leuchtvorgabe erhöht wird. Beispielsweise wird das Leuchtdioden-Array 20 hierzu derart angesteuert, dass sämtliche Leuchtdioden 26 eingeschaltet werden.

In einem siebten Schritt 117 steuert die Steuereinrichtung 30 dann die Kamera 16 derart an, dass die Kamera 16 wenigstens ein Bild aufnimmt. Die Kamera 16 kann auch dazu angesteuert werden, eine Bildfolge aufzunehmen.

Im Anschluss an die erfolgte Bildaufnahme kann die Fotobox 10 wieder in den Standby-Modus 105 versetzt werden. Beispielsweise wird mit Abschluss der Bildaufnahme ein Timer gestartet und die Fotobox 10 wird nach Ablauf des Timers wieder in den Standby-Modus 105 versetzt. Der Timer kann beispielsweise 10 Sekunden betragen.

## Patentansprüche

1. Verfahren zum Betreiben einer Fotobox (10), wobei die Fotobox (10)
- ein Gehäuse (12),
- eine Kamera (14), insbesondere USB-Kamera, Systemkamera, Industriekamera oder Kompaktkamera, die in dem Gehäuse (12) angeordnet und auf einen Erfassungsbereich außerhalb des Gehäuses (12) gerichtet ist, und
- ein Leuchtdioden-Array (20) umfasst, das derart in oder an dem Gehäuse (12) angeordnet ist, dass der Erfassungsbereich durch das Leuchtdioden-Array (20) beleuchtbar ist, wobei das Leuchtdioden-Array (20) eine Vielzahl von individuell ansteuerbaren Leuchtdioden (26) umfasst, wobei:
- das Leuchtdioden-Array (20) gemäß einer Steueranweisung derart angesteuert wird, dass das Leuchtdioden-Array (20) wenigstens zeitweise einen Leuchtzustand einnimmt, in dem sich die Helligkeit wenigstens einer ersten Leuchtdiode (26A) der Leuchtdioden (26) von der Helligkeit wenigstens einer zweiten Leuchtdiode (26B) der Leuchtdioden (26) unterscheidet.

2. Verfahren nach Anspruch 1, **dadurch gekennzeichnet, dass** sich in dem Leuchtzustand die Helligkeit wenigstens einer dritten Leuchtdiode der Leuchtdioden (26) von der Helligkeit der wenigstens einen ersten Leuchtdiode und von der Helligkeit der wenigstens einen zweiten Leuchtdiode unterscheidet.

3. Verfahren nach einem der vorhergehenden Ansprüche, **dadurch gekennzeichnet, dass** in dem Leuchtzustand mehrere erste Leuchtdioden (26A) und/oder mehrere zweite Leuchtdioden (26B) vorhanden sind.

4. Verfahren nach einem der vorhergehenden Ansprüche, **dadurch gekennzeichnet, dass** das Leuchtdioden-Array (20) mehrere Reihen (28) von Leuchtdioden (26) umfasst, wobei jede Reihe (28) durch eine jeweils andere Steuereinheit (34) angesteuert wird, oder dass das Leuchtdioden-Array (20) mehrere Spalten von Leuchtdioden (26) umfasst, wobei jede Spalte durch eine jeweils andere Steuereinheit (34) angesteuert wird.

5. Verfahren nach dem vorhergehenden Anspruch, **dadurch gekennzeichnet, dass** die Steueranweisung durch eine Haupt-Steuereinheit (60), insbesondere Mikroprozessor, erzeugt wird, wobei die Haupt-Steuereinheit (60) den Steuereinheiten (34) die Steueranweisung bereitstellt.

6. Verfahren nach einem der vorhergehenden Ansprüche, **dadurch gekennzeichnet, dass** das Leuchtdioden-Array (20) gemäß der Steueranweisung derart angesteuert wird, dass das Leuchtdioden-Array (20) in zeitlicher Abfolge mehrere Leuchtzustände einnimmt, die sich voneinander unterscheiden.

7. Verfahren nach dem vorhergehenden Anspruch, **dadurch gekennzeichnet, dass** das Leuchtdioden-Array (20) die Leuchtzustände mit einer Wechselfrequenz von höchstens 10 Hz wechselt, vorzugsweise höchstens 5 Hz.

8. Verfahren nach einem der vorhergehenden Ansprüche, **dadurch gekennzeichnet, dass** die Steueranweisung in Abhängigkeit von einer durch einen Benutzer bereitstellbaren Leuchtvorgabe erzeugt wird.

9. Verfahren nach einem der vorhergehenden Ansprüche, **dadurch gekennzeichnet, dass** die Leuchtvorgabe wenigstens ein Symbol und/oder wenigstens ein Schriftzeichen, insbesondere eine Schriftzeichenfolge, umfasst, und dass das Leuchtdioden-Array (20) derart angesteuert wird, dass das Leuchtdioden-Array (20) das wenigstens eine Symbol und/oder das wenigstens eine Schriftzeichen, insbesondere die Schriftzeichenfolge, anzeigt, insbesondere als Laufschrift.

10. Verfahren nach einem der vorhergehenden Ansprüche, **dadurch gekennzeichnet, dass** die Kamera (14) in Abhängigkeit von einer durch einen Benutzer bereitstellbaren Fotografiervorgabe dazu angesteuert wird, wenigstens eine Bildaufnahme durchzuführen.

11. Verfahren nach dem vorhergehenden Anspruch, **dadurch gekennzeichnet, dass** das Leuchtdioden-Array (20) in Abhängigkeit von der Fotografiervorgabe derart angesteuert wird, dass eine durch das Leuchtdioden-Array (20) erzeugte Helligkeit für die Dauer der Bildaufnahme erhöht wird.

12. Verfahren nach dem vorhergehenden Anspruch, **dadurch gekennzeichnet, dass** das Leuchtdioden-Array (20) eine Gruppe von ausgewählten Leuchtdioden (26) umfasst, und dass die erzeugte Helligkeit dadurch erhöht wird, dass die ausgewählten Leuchtdioden (26) für die Dauer der Bildaufnahme unabhängig von der Leuchtvorgabe eingeschaltet werden.

13. Fotobox (10), umfassend:
- ein Gehäuse (12),
- eine Kamera (14), insbesondere USB-Kamera, Systemkamera, Industriekamera oder Kompaktkamera, die in dem Gehäuse (12) angeordnet und auf einen Erfassungsbereich außerhalb des Gehäuses (12) gerichtet ist,
- ein Leuchtdioden-Array (20), das derart an oder in dem Gehäuse (12) angeordnet ist, dass der Erfassungsbereich durch das Leuchtdioden-Array (20) beleuchtbar ist, wobei das Leuchtdioden-Array (20) eine Vielzahl von individuell ansteuerbaren Leuchtdioden (26) umfasst, vorzugsweise wenigstens 40 individuell ansteuerbare Leuchtdioden (26), und
- eine Steuereinrichtung (30), die so ausgebildet ist, dass sie das Verfahren gemäß einem der Ansprüche 1 bis 12 ausführt.

14. Fotobox (10) nach dem vorhergehenden Anspruch, **dadurch gekennzeichnet, dass** das Leuchtdioden-Array (20) mehrere Reihen (28) von Leuchtdioden (26) umfasst, wobei jede Reihe (28) durch eine jeweils andere Steuereinheit (34) der Steuereinrichtung (30) ansteuerbar ist, oder dass das Leuchtdioden-Array (20) mehrere Spalten von Leuchtdioden (26) umfasst, wobei jede Spalte durch eine jeweils andere Steuereinheit (34) der Steuereinrichtung (30) ansteuerbar ist.

15. Fotobox (10) nach einem der Ansprüche 13 und 14, **dadurch gekennzeichnet, dass** das Gehäuse (12) einen aus einem Metallwerkstoff, insbesondere aus Aluminium, gefertigten Wandungsabschnitt (54) umfasst, wobei die Steuereinrichtung (30), die Kamera (14) und/oder das Leuchtdioden-Array (20) mit dem Wandungsabschnitt (54) in Wärmeleitkontakt sind.

## Geänderte Patentansprüche

### Geänderte Patentansprüche gemäss Regel 137(2) EPÜ.

1. Verfahren zum Betreiben einer Fotobox (10), wobei die Fotobox (10)
- ein Gehäuse (12),
- eine Kamera (14), insbesondere USB-Kamera, Systemkamera, Industriekamera oder Kompaktkamera, die in dem Gehäuse (12) angeordnet und auf einen Erfassungsbereich außerhalb des Gehäuses (12) gerichtet ist,
- ein Leuchtdioden-Array (20), das derart in oder an dem Gehäuse (12) angeordnet ist, dass der Erfassungsbereich durch das Leuchtdioden-Array (20) beleuchtbar ist, wobei das Leuchtdioden-Array (20) eine Vielzahl von individuell ansteuerbaren Leuchtdioden (26) umfasst, und wobei das Leuchtdioden-Array (20) mehrere Reihen (28) von Leuchtdioden (26) und/oder mehrere Spalten von Leuchtdioden (26) umfasst, und
- eine Steuereinrichtung (30) umfasst, die mehrere Steuereinheiten (34) aufweist, wobei:
- das Leuchtdioden-Array (20) gemäß einer Steueranweisung derart angesteuert wird, dass das Leuchtdioden-Array (20) wenigstens zeitweise einen Leuchtzustand einnimmt, in dem sich die Helligkeit wenigstens einer ersten Leuchtdiode (26A) der Leuchtdioden (26) von der Helligkeit wenigstens einer zweiten Leuchtdiode (26B) der Leuchtdioden (26) unterscheidet, und
- jede Reihe (28) von Leuchtdioden (26) durch eine jeweils andere Steuereinheit (34) angesteuert wird, oder jede Spalte von Leuchtdioden (26) durch eine jeweils andere Steuereinheit (34) angesteuert wird.

2. Verfahren nach Anspruch 1, **dadurch gekennzeichnet, dass** sich in dem Leuchtzustand die Helligkeit wenigstens einer dritten Leuchtdiode der Leuchtdioden (26) von der Helligkeit der wenigstens einen ersten Leuchtdiode und von der Helligkeit der wenigstens einen zweiten Leuchtdiode unterscheidet.

3. Verfahren nach einem der vorhergehenden Ansprüche, **dadurch gekennzeichnet, dass** in dem Leuchtzustand mehrere erste Leuchtdioden (26A) und/oder mehrere zweite Leuchtdioden (26B) vorhanden sind.

4. Verfahren nach einem der vorhergehenden Ansprüche, **dadurch gekennzeichnet, dass** die Steueranweisung durch eine Haupt-Steuereinheit (60), insbesondere Mikroprozessor, erzeugt wird, wobei die Haupt-Steuereinheit (60) den Steuereinheiten (34) die Steueranweisung bereitstellt.

5. Verfahren nach einem der vorhergehenden Ansprüche, **dadurch gekennzeichnet, dass** das Leuchtdioden-Array (20) gemäß der Steueranweisung derart angesteuert wird, dass das Leuchtdioden-Array (20) in zeitlicher Abfolge mehrere Leuchtzustände einnimmt, die sich voneinander unterscheiden.

6. Verfahren nach dem vorhergehenden Anspruch, **dadurch gekennzeichnet, dass** das Leuchtdioden-Array (20) die Leuchtzustände mit einer Wechselfrequenz von höchstens 10 Hz wechselt, vorzugsweise höchstens 5 Hz.

7. Verfahren nach einem der vorhergehenden Ansprüche, **dadurch gekennzeichnet, dass** die Steueranweisung in Abhängigkeit von einer durch einen Benutzer bereitstellbaren Leuchtvorgabe erzeugt wird.

8. Verfahren nach einem der vorhergehenden Ansprüche, **dadurch gekennzeichnet, dass** die Leuchtvorgabe wenigstens ein Symbol und/oder wenigstens ein Schriftzeichen, insbesondere eine Schriftzeichenfolge, umfasst, und dass das Leuchtdioden-Array (20) derart angesteuert wird, dass das Leuchtdioden-Array (20) das wenigstens eine Symbol und/oder das wenigstens eine Schriftzeichen, insbesondere die Schriftzeichenfolge, anzeigt, insbesondere als Laufschrift.

9. Verfahren nach einem der vorhergehenden Ansprüche, **dadurch gekennzeichnet, dass** die Kamera (14) in Abhängigkeit von einer durch einen Benutzer bereitstellbaren Fotografiervorgabe dazu angesteuert wird, wenigstens eine Bildaufnahme durchzuführen.

10. Verfahren nach dem vorhergehenden Anspruch, **dadurch gekennzeichnet, dass** das Leuchtdioden-Array (20) in Abhängigkeit von der Fotografiervorgabe derart angesteuert wird, dass eine durch das Leuchtdioden-Array (20) erzeugte Helligkeit für die Dauer der Bildaufnahme erhöht wird.

11. Verfahren nach dem vorhergehenden Anspruch, **dadurch gekennzeichnet, dass** das Leuchtdioden-Array (20) eine Gruppe von ausgewählten Leuchtdioden (26) umfasst, und dass die erzeugte Helligkeit dadurch erhöht wird, dass die ausgewählten Leuchtdioden (26) für die Dauer der Bildaufnahme unabhängig von der Leuchtvorgabe eingeschaltet werden.

12. Fotobox (10), umfassend:
- ein Gehäuse (12),
- eine Kamera (14), insbesondere USB-Kamera, Systemkamera, Industriekamera oder Kompaktkamera, die in dem Gehäuse (12) angeordnet und auf einen Erfassungsbereich außerhalb des Gehäuses (12) gerichtet ist,
- ein Leuchtdioden-Array (20), das derart an oder in dem Gehäuse (12) angeordnet ist, dass der Erfassungsbereich durch das Leuchtdioden-Array (20) beleuchtbar ist, wobei das Leuchtdioden-Array (20) eine Vielzahl von individuell ansteuerbaren Leuchtdioden (26) umfasst, vorzugsweise wenigstens 40 individuell ansteuerbare Leuchtdioden (26), und wobei das Leuchtdioden-Array (20) mehrere Reihen (28) von Leuchtdioden (26) und/oder mehrere Spalten von Leuchtdioden (26) umfasst, und
- eine Steuereinrichtung (30), die so ausgebildet ist, dass sie das Verfahren gemäß einem der Ansprüche 1 bis 11 ausführt, wobei die Steuereinrichtung (30) mehrere Steuereinheiten (34) aufweist, und wobei jede Reihe (28) von Leuchtdioden (26) durch eine jeweils andere Steuereinheit (34) der Steuereinrichtung (30) ansteuerbar ist oder jede Spalte von Leuchtdioden (26) durch eine jeweils andere Steuereinheit (34) der Steuereinrichtung (30) ansteuerbar ist.

13. Fotobox (10) nach Anspruch 12, **dadurch gekennzeichnet, dass** das Gehäuse (12) einen aus einem Metallwerkstoff, insbesondere aus Aluminium, gefertigten Wandungsabschnitt (54) umfasst, wobei die Steuereinrichtung (30), die Kamera (14) und/oder das Leuchtdioden-Array (20) mit dem Wandungsabschnitt (54) in Wärmeleitkontakt sind.
